# EUROPÄISCHE PATENTSCHRIFT

(11) **EP 0 947 670 B1**
(45) Veröffentlichungstag und Bekanntmachung des Hinweises auf die Patenterteilung: **28.04.2004**
(21) Anmeldenummer: 99101705.4
(22) Anmeldetag: 09.02.1999
(51) Int. Cl.: F01L 1/02, F16F 15/12, F16D 3/58

(54) **Nockenwellentrieb einer Brennkraftmaschine**
Camshaft drive of an internal combustion engine
Entraînement d'arbre à cames d'un moteur à combustion interne

(30) Priorität: 04.04.1998 DE 19815270
(43) Veröffentlichungstag der Anmeldung: 06.10.1999
(73) Patentinhaber: Volkswagen Aktiengesellschaft, 38436 Wolfsburg (DE)
(72) Erfinder: Warnecke, Dirk, Dipl.-Ing., 38518 Gifhorn (DE); Biener, Martin, 38173 Veltheim (DE)

(56) Entgegenhaltungen:
- EP-A- 0 748 926
- DE-A- 19 600 853
- DE-A- 19 620 745
- PATENT ABSTRACTS OF JAPAN vol. 1995, no. 04, 31. Mai 1995 (1995-05-31) & JP 07 026986 A (MITSUBISHI MOTORS CORP), 27. Januar 1995 (1995-01-27)
- PATENT ABSTRACTS OF JAPAN vol. 008, no. 177 (M-317), 15. August 1984 (1984-08-15) & JP 59 069549 A (HONDA GIKEN KOGYO KK), 19. April 1984 (1984-04-19)

## Beschreibung

Die Erfindung betrifft einen Nockenwellentrieb einer Brennkraftmaschine gemäß dem Oberbegriff des Patentanspruchs 1.

Einen gattungsgemäßen Nockenwellentrieb beschreibt die JP 59069549 A. Bekannt sind ferner Geberscheiben zur Erzeugung von Signalen für Bestandteile eines Motormanagements; vgl. die DE 196 00 853 A.

Beispielsweise bei Kraftfahrzeugen mit einem gattungsgemäßen Nockenwellentrieb ergibt sich die Schwierigkeit, dass Drehschwingungen zum Erhalten einer längeren Lebensdauer des Endlostriebes bedämpft werden müssen. Ferner ist die Montage eines Nockenwellentriebes aufwendig und zeitintensiv. Häufig muss ein Ventildeckel der Brennkraftmaschine bis zum Abschluss der Montage und Justierung des Endlostriebes der Nockenwelle offen bleiben. Dies bedeutet insbesondere, dass die Brennkraftmaschine bei der Anlieferung und bis zum Montage, beispielsweise in einem Kraftfahrzeug, ventlitriebseitig offen bleiben muss. Daher müssen entsprechende Anstrengungen unternommen werden, um ein Eindringen von Schmutz oder Fremdkörpern in den Ventiltrieb zu vermeiden, was teuer und aufwendig ist. Ebenso gestalten sich Wartungs- und Reparaturarbeiten, welche eine vorübergehende Demontage des Endlostriebes der Nockenwelle erfordern, aufwendig und kostenintensiv. Bei einer anschließenden Rückmontage des Nockenwellentriebes sind nämlich wieder die gleichen komplizierten Arbeitsschritte zur Justierung des Nockenwellentriebes mit offenem Ventildeckel erforderlich, wie bei der Erstmontage.

Aus dem deutschen Gebrauchsmuster DE 297 08 574 U1 ist ferner ein Nockenwellenrad bekannt, welches integral ein Dämpfergehäuse aufweist. Das Dämpfergehäuse nimmt dabei Torsionsviskosedämpfer auf. Dieses System dämpft zwar in gewissem Umfang Drehschwingungen, jedoch ist diese Dämpfungseigenschaft durch den integralen Aufbau von Nockenwellenrad und Dämpfergehäuse stark eingeschränkt. Ferner kann dieses System nicht das Problem des oben erläuterten komplizierten Zusammenbaus und der Justierung des Nockenwellentriebes lösen.

Der Erfindung liegt daher die Aufgabe zugrunde, einen Nockenwellentrieb der obengenannten Art zur Verfügung zu stellen, bei dem die obengenannten Nachteile überwunden werden und wirksame Drehschwingungsdämpfung bei gleichzeitig einfachem Aufbau und einfacher Montage gewährleistet ist.

Diese Aufgabe wird erfindungsgemäß durch einen Nockenwellentrieb der obengenannten Art mit den in Anspruch 1 gekennzeichneten Merkmalen gelöst. Vorteilhafte Ausgestaltungen der Erfindung sind in den abhängigen Ansprüchen angegeben.

Erfindungsgemäß ist also vorgesehen, dass die zusätzliche Drehmasse, der Drehschwingungsdämpfer und eine Geberscheibe als eine Baueinheit unter Verwendung einer Passfeder aufsteckbar auf die Nockenwelle ausgebildet sind.

Optional kann auch das Rad Teil dieser Baueinheit sein.

Dies hat den Vorteil, dass bei einer Montage lediglich diese vorgefertigte Baueinheit auf die Nockenwelle aufzuschieben und nachträglich ein Kraftübertragungsmittel des Endlostriebes, wie beispielsweise eine Kette oder ein Poly-V-Riemen aufzulegen ist.

Eine besonders gute Drehschwingungsdämpfung über einen großen Frequenzbereich erzielt man dadurch, daß der Drehschwingungsdämpfer eine radial innen liegende Nabe, einen radial außen liegenden Schwungring und ein zwischen diesen angeordnetes und diese verbindendes drehelastisches Element aufweist. Durch entsprechende Dimensionierung des drehelastischen Elementes und des Schwungringes ist dieser Drehschwingungsdämpfer individuell an eine Brennkraftmaschine anpaßbar.

Zweckmäßigerweise ist das drehelastische Element ein Elastomer.

Eine einfache Justierbarkeit des Nockenwellentriebes erzielt man dadurch, daß an einer vorbestimmten Stelle ein alle Teile der Baueinheit in axialer Richtung durchziehendes Durchgangsloch ausgebildet ist. Durch dieses Loch ist ein Fixiermittel, wie beispielsweise ein Stift, steckbar, welches beispielsweise in eine hochpräzise Bohrung in einem den Ventiltrieb enthaltenden Zylinderkopf greift. Auf diese Weise ist eine vorbestimmte Position der Baueinheit und damit eine vorbestimmte Position bzw. Stellung der Nockenwelle mit Ventiltrieb einstellbar, ohne daß diese Position mittels Justierung bei offenem Ventildeckel manuell mühsam eingestellt werden muß. Somit kann in vorteilhafter Weise die Brennkraftmaschine zu einer Endmontage mit bereits aufgeschraubten Ventildeckel angeliefert werden, was entsprechende Erleichterungen für den Transport und die Lagerung vor der Montage mit sich bringt. Ebenfalls gestaltet sich die Montage des Endlostriebes einfach und schnell da einfach die Baueinheit in der vorbestimmten Position abzustecken, d.h. zu fixieren ist, und anschließend gegebenenfalls das Rad und das Kraftübertragungsmittel des Endlostriebes, wie beispielsweise eine Kette oder ein Zahnriemen, aufzulegen ist. Weitere Justierarbeiten sind in der Regel nicht erforderlich.

Eine Feineinstellungsmöglichkeit des Rades und damit des Endlostriebes bezüglich der Nockenwelle und den anderen Teilen der Baueinheit erzielt man dadurch, daß das Durchgangsloch im Rad in radialer Richtung erweitert ist.

Eine einfache Feineinstellung der Position des Rades bezüglich der Nockenwelle und den anderen Teilen der Baueinheit erzielt man dadurch, daß im Rad eine Ausnehmung mit einer sich in radialer Richtung erstreckenden Innenverzahnung und in einem Teil der Baueinheit im Bereich hinter der Ausnehmung des Rades eine Bohrung ausgebildet ist. Ein Werkzeug mit Außenverzahnung ist in der Bohrung derart ansetzbar, daß dessen Außenverzahnung in die Innenverzahnung des Rades greift. Eine Drehung des Werkzeuges erlaubt somit eine präzise Feinjustierung der Position des Rades bzgl. des entsprechenden Teiles, in dem die Bohrung ausgebildet ist und damit eine Feinjustierung der Position des Rades bzw. des Endlostriebes bezüglich der Nockenwelle. Dieses Teil der Baueinheit mit der Bohrung ist beispielsweise die zusätzliche Drehmasse.

Eine kostengünstige Fertigung der Bohrung ohne hohe Anforderungen an Toleranzen in axialer Richtung erzielt man dadurch, daß die Durchgangsbohrung in der zusätzlichen Drehmasse und/oder in der Geberscheibe axial erweitert ist. Dies erzielt in axialer Richtung immer eine fluchtende Öffnung für ein durchzusteckendes Fixiermittel, ohne dabei in axialer Richtung besonders enge Toleranzen für die Durchgangsbohrungen definieren zu müssen. Für eine genau Justierung der Baueinheit ist dies unschädlich, da es hier lediglich auf eine genau vorbestimmte Winkelrelation zwischen den Teilen der Baueinheit, also eine relative Positionierung der Teile der Baueinheit in Umfangsrichtung, ankommt.

Zweckmäßigerweise ist der Endlostrieb ein Kettentrieb, wobei das Rad ein Kettenrad ist, oder ein Zahnriemen, wobei das Rad ein Zahnriemenrad ist.

Weitere Merkmale, Vorteile und vorteilhafte Ausgestaltungen der Erfindung ergeben sich aus den abhängigen Ansprüchen, sowie aus der nachstehenden Beschreibung der Erfindung anhand der beigefügten Zeichnungen. Diese zeigen in
- Fig. 1: eine bevorzugte Ausführungsform einer erfindungsgemäß ausgestalteten Baueinheit für einen erfindungsgemäßen Nockenwellentrieb in Aufsicht und
- Fig. 2: in einer Schnittansicht entlang Linie A-A von Fig. 1.

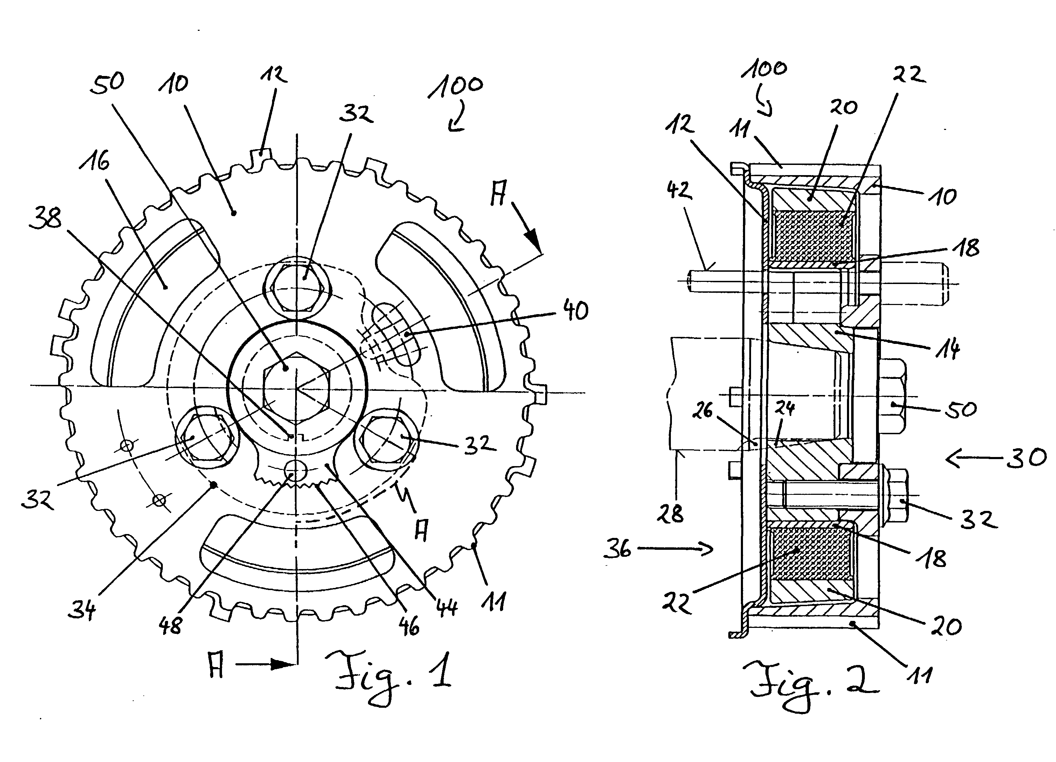

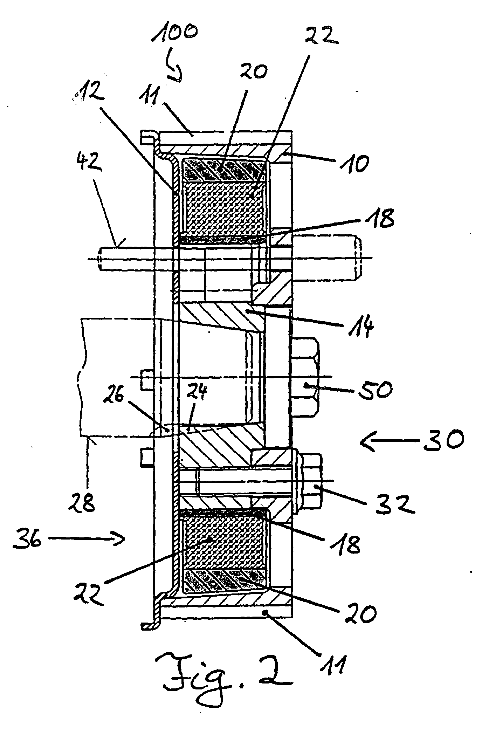

Die in Fig. 1 und 2 dargestellte bevorzugte Ausführungsform einer erfindungsgemäße ausgestalteten Baueinheit 100 umfaßt ein Rad 10 eines Endlostriebes, wie beispielsweise ein Zahnriemenrad für einen Zahn- oder Poly-V-Riemen, mit einer Umfangsverzahnung 11, eine Geberscheibe 12, eine als Nabe ausgebildete zusätzliche Drehmasse 14 und einen Drehschwingungsdämpfer 16. Der Drehschwingungsdämpfer 16 weist eine radial innen liegende Nabe 18 sowie einen radial außen liegenden Schwungring 20 auf, wobei zwischen diesen Teilen 18 und 22 ein drehelastisches Element 22, wie beispielsweise ein Elastomer, die Teile 18 und 20 drehelastisch verbindend angeordnet ist.

Die Nabe 14 ist mittels einer in eine Nut 26 einer Nockenwelle 28 greifenden Paßfeder 24 auf die Nockenwelle 28 aufgeschoben und in der Art einer Paßfedernut befestigt (Fig. 2). Dies schafft gleichzeitig eine vorbestimmte und fixierte Winkelposition der Baueinheit 100 bzgl. der Nockenwelle 28. An einer Stirnseite 30 ist das Rad 10 an der Nabe 14 mittels Schrauben 32 festgeschraubt. Der Drehschwingungsdämpfer 16 ist radial außen auf die Nabe 14 aufgepreßt. Eine gestrichelte Linie 34 veranschaulicht in Fig. 1 eine Berührungsfläche zwischen dem Drehschwingungsdämpfer 16 bzw. dessen Nabe 18 und der Nabe 14. An einer der Stirnseite gegenüberliegenden Rückseite 36 (Fig. 2) der Nabe 14 ist die Geberscheibe 12 festgelegt. Für eine vorbestimmte Winkelposition der Geberscheibe 12 bezüglich der anderen Bauteile 10, 14 und 16 ist an der Geberscheibe eine Lasche 38 (Fig. 1) ausgebildet, welche bei richtiger Positionierung in eine entsprechende, nicht dargestellte Ausnehmung in der Nabe 14 greift.

Diese Baueinheit 100, bestehend zumindest aus den Teilen 12, 14 und 16, gegebenenfalls zusätzlich aus dem Rad 10, ist vor dem Zusammenbau des Nockenwellentriebes montiert und muß lediglich auf die Nockenwelle 28 aufgeschoben werden. Zum Einstellen einer vorbestimmten Winkelposition der Baueinheit 100 mit der Nockenwelle 28, so daß eine vorbestimmte Justierung bzw. Stellung des nicht dargestellten und von der Nockenwelle 28 angetriebenen Ventiltriebes erzielt wird, ist ein das Bauteil 100 durchgreifendes Durchgangsloch 40 vorgesehen, wobei im Rad 10, in der Nabe 14 und in der Geberscheibe 12 entsprechende das Durchgangsloch 40 bildende Durchgangsbohrungen ausgebildet sind. Für bestimmte Anwendungen kann es vorteilhaft sein, die Baueinheit 100 zunächst ohne das Rad 10 zu montieren, die später erläuterte Schraube 50 festzuziehen und anschließend das Rad 10 mittels der Schrauben 32 festzulegen.

Durch das Durchgangsloch 40 ist ein Fixierstift 42 steckbar, welcher beispielsweise in eine nicht dargestellte hochpräzise Bohrung in einem nicht dargestellten Zylinderkopf, welcher den Ventiltrieb enthält, eingreift. Auf diese Weise ist die Baueinheit 100 und damit die Nokkenwelle 28 mit dem Ventiltrieb im Zylinderkopf in einer vorbestimmten Winkelposition bzw. Stellung fixiert, wobei diese Position durch die Kombination aus Durchgangsloch 40, Fixierstift 42 und hochpräziser Bohrung im Zylinderkopf vorgegeben ist und nicht manuell unter Beobachtung des Ventiltriebes bei abgenommenen Ventildeckel eingestellt werden muß. Diese Justierung ist wesentlich schneller und genauer als die manuelle Einstellung bei abgenommenen Ventildeckel.

Die Durchgangsbohrung im Rad 10 ist in radialer Richtung erweitert, so daß eine Feinjustierung des Rades 10 bzgl. der Baueinheit 100 möglich ist. Hierzu ist im Rad 10 eine Ausnehmung 44 ausgebildet, welche eine radial verlaufende Innenverzahnung 46 aufweist. In einem Bereich der Ausnehmung 44 ist in der dahinter liegenden Nabe 14 eine Bohrung 48 ausgebildet. In diese Bohrung 48 kann ein nicht dargestelltes Werkzeug, wie beispielsweise ein Außenzahnschlüssel derart eingreifen, daß dessen Außenverzahnung mit der Innenverzahnung 46 kämmt. Eine Drehung des Werkzeuges ermöglicht somit eine präzise Justierung der Winkelposition des Rades 14 bezüglich des Bauteiles 100.

Die Durchgangsbohrung in der Geberscheibe 12 und/oder in der Nabe 14 ist bevorzugt in axialer Richtung erweitert. Dadurch sind Toleranzen in axialer Richtung zwischen den einzelnen das Durchgangsloch 40 bildenden Durchgangsbohrungen unkritisch.

Mittels einer Schraube 50 wird die auf die Nockenwelle 28 aufgeschobene Baueinheit 100 stirnseitig an der Nockenwelle 28 befestigt.

## Patentansprüche

1. Nockenwellentrieb einer Brennkraftmaschine, insbesondere eines Kraftfahrzeuges, mit einer Nockenwelle (28), einem Rad (10) eines Endlostriebes, einer Geberscheibe (12), einer zusätzlichen Drehmasse (14) und einem Drehschwingungsdämpfer (16),
**dadurch gekennzeichnet, dass**
die zusätzliche Drehmasse (14), der Drehschwingungsdämpfer (16) und eine Geberscheibe (12) als eine Baueinheit (100) aufsteckbar auf die Nockenwelle (28) ausgebildet sind, dass ferner die zusätzliche Drehmasse als Nabe (14) ausgebildet und mittels einer in eine Nut (26) auf der Nockenwelle (28) greifenden Passfeder (24) auf die Nockenwelle (28) aufgeschoben und befestigt ist, und dass der Drehschwingungsdämpfer (16) radial auf die zusätzliche Drehmasse (14) aufgepresst ist.

2. Nockenwellentrieb nach Anspruch 1,
**dadurch gekennzeichnet, dass**
das Rad (10) als Teil der Baueinheit (100) an einer Stirnseite (30) der Drehmasse (14) an dieser befestigt, insbesondere aufgeschraubt, ist.

3. Nockenwellentrieb nach einem der vorhergehenden Ansprüche,
**dadurch gekennzeichnet, dass**
die Geberscheibe (12) an einer einer Stirnseite (30) der zusätzlichen Drehmasse (14) gegenüberliegenden Rückseite (36) der zusätzlichen Drehmasse (14) befestigt ist.

4. Nockenwellentrieb nach einem der vorhergehenden Ansprüche,
**dadurch gekennzeichnet, daß**
der Drehschwingungsdämpfer (16) eine radial innen liegende Nabe (18), einen radial außen liegenden Schwungring (20) und ein zwischen diesen angeordnetes und diese verbindendes drehelastisches Element (22) aufweist.

5. Nockenwellentrieb nach Anspruch 4,
**dadurch gekennzeichnet, daß**
das drehelastische Element (22) ein Elastomer ist.

6. Nockenwellentrieb nach einem der Ansprüche 1 bis 5,
**dadurch gekennzeichnet, daß**
an einer vorbestimmten Stelle ein alle Teile der Baueinheit (100) in axialer Richtung durchziehendes Durchgangsloch (40) ausgebildet ist.

7. Nockenwellentrieb nach Anspruch 6,
**dadurch gekennzeichnet, daß**
das Durchgangsloch (40) im Rad (10) in radialer Richtung erweitert ist.

8. Nockenwellentrieb nach einem der vorhergehenden Ansprüche,
**dadurch gekennzeichnet, daß**
im Rad (10) eine Ausnehmung (44) mit sich in radialer Richtung erstreckender Innenverzahnung (46) und in einem Teil (14) der Baueinheit (100) im Bereich der Ausnehmung (44) des Rades (10) eine Bohrung (48) ausgebildet ist.

9. Nockenwellentrieb nach Anspruch 8,
**dadurch gekennzeichnet, daß**
das Teil der Baueinheit (100) mit der Bohrung (48) die zusätzliche Drehmasse (14) ist.

10. Nockenwellentrieb nach einem der vorhergehenden Ansprüche,
**dadurch gekennzeichnet, daß**
die Durchgangsbohrung (40) in der zusätzlichen Drehmasse (14) und/oder in der Geberscheibe (12) axial erweitert ist.

11. Nockenwellentrieb nach einem der vorhergehenden Ansprüche,
**dadurch gekennzeichnet, daß**
der Endlostrieb ein Kettentrieb und das Rad ein Kettenrad ist.

12. Nockenwellentrieb nach einem der Ansprüche 1 bis 10,
**dadurch gekennzeichnet, daß**
der Endlostrieb ein Zahnriemen und das Rad ein Zahnriemenrad (10) ist.

## Claims

1. Camshaft drive of an internal combustion engine, in particular of a motor vehicle, with a camshaft (28), with a wheel (10) of an endless drive, with a master disc (12), with an additional rotary mass (14) and with a torsional vibration damper (16), **characterized in that** the additional rotary mass (14), the torsional vibration damper (16) and a master disc (12) are designed so as to be capable of being plugged as a structural unit (100) onto the camshaft (28), **in that**, furthermore, the additional rotary mass is designed as a hub (14) and is pushed onto the camshaft (28) and fastened by means of a feather key (24) engaging into a slot (26) on the camshaft (28), and **in that** the torsional vibration damper (16) is pressed radially onto the additional rotary mass (14).

2. Camshaft drive according to Claim 1, **characterized in that** the wheel (10) is fastened, in particular screwed, as part of the structural unit (100) to the rotary mass (14) on one end face (30) of the latter.

3. Camshaft drive according to one of the preceding claims, **characterized in that** the master disc (12) is fastened on a rear side (36) of the additional rotary mass (14), the said rear side being located opposite one end face (30) of the additional rotary mass (14).

4. Camshaft drive according to one of the preceding claims, **characterized in that** the torsional vibration damper (16) has a radially inner hub (18), a radially outer flywheel ring (20) and a torsionally elastic element (22) arranged between these and connecting these.

5. Camshaft drive according to Claim 4, **characterized in that** the torsionally elastic element (22) is an elastomer.

6. Camshaft drive according to one of Claims 1 to 5, **characterized in that** a passage hole (40) passing through all parts of the structural unit (100) in the axial direction is formed at a predetermined point.

7. Camshaft drive according to Claim 6, **characterized in that** the passage hole (40) is widened in the radial direction in the wheel (10).

8. Camshaft drive according to one of the preceding claims, **characterized in that** a recess (44) with an internal toothing (46) extending in the radial direction is formed in the wheel (10), and a bore (48) is formed in a part (14) of the structural unit (100) in the region of the recess (44) of the wheel (10).

9. Camshaft drive according to Claim 8, **characterized in that** the part of the structural unit (100) having the bore (48) is the additional rotary mass (14).

10. Camshaft drive according to one of the preceding claims, **characterized in that** the passage bore (40) is widened axially in the additional rotary mass (14) and/or in the master disc (12).

11. Camshaft drive according to one of the preceding claims, **characterized in that** the endless drive is a chain drive and the wheel is a chain wheel.

12. Camshaft drive according to one of Claims 1 to 10, **characterized in that** the endless drive is a toothed belt and the wheel is a toothed-belt wheel (10).

## Revendications

1. Entraînement d'arbre à cames d'un moteur à combustion interne, notamment d'un véhicule automobile, avec un arbre à cames (28), un pignon (10) d'un mécanisme d'entraînement sans fin, un disque capteur (12), une masse en rotation supplémentaire (14) et un amortisseur des oscillations de rotation (16),
**caractérisé en ce que**
la masse en rotation supplémentaire (14), l'amortisseur des oscillations de rotation (16) et un disque capteur (12) sont conçus sous forme d'un ensemble (100) enfichable sur l'arbre à cames (28), **en ce que** par ailleurs, la masse en rotation supplémentaire est conçue sous forme de moyeu (14) et coulissée puis fixée sur l'arbre à cames (28) à l'aide d'un ressort d'ajustage (24) s'accrochant dans une rainure (26) ménagée sur l'arbre à cames (28) et **en ce que** l'amortisseur des oscillations de rotation (16) est pressé en direction radiale sur la masse en rotation supplémentaire (14).

2. Entraînement d'arbre à cames selon la revendication 1,
**caractérisé en ce que**
le pignon (10) constituant une pièce de l'ensemble (100) est fixé, notamment vissé sur la masse en rotation (14), sur une face frontale (30) de cette dernière.

3. Entraînement d'arbre à cames selon l'une quelconque des revendications précédentes,
**caractérisé en ce que**
le disque capteur (12) est fixé sur une face arrière (38) de la masse en rotation supplémentaire (14) qui est opposée à une face frontale (30) de la masse en rotation supplémentaire (14).

4. Entraînement d'arbre à cames selon l'une quelconque des revendications précédentes,
**caractérisé en ce que**
l'amortisseur des oscillations de rotation (16) est muni d'un moyeu interne (18) situé côté radial, d'une bague d'inertie (20) externe située côté radial et d'un élément élastique en rotation (22) situé entre ces derniers et les reliant.

5. Entraînement d'arbre à cames selon la revendication 4,
**caractérisé en ce que**
l'élément élastique en rotation (22) est un élastomère.

6. Entraînement d'arbre à cames selon l'une quelconque des revendications 1 à 5,
**caractérisé en ce**
**qu'**un trou (40) traversant toutes les pièces de l'ensemble (100) en direction axiale est ménagé en un point prédéfini.

7. Entraînement d'arbre à cames selon la revendication 6,
**caractérisé en ce que**
le trou traversant (40) est évasé en direction radiale dans le pignon (10).

8. Entraînement d'arbre à cames selon l'une quelconque des revendications précédentes,
**caractérisé en ce**
**qu'**un creux (44) muni d'une denture interne (46), s'étendant en direction radiale, est ménagé dans le pignon (10) et un alésage (48) est ménagé dans une pièce (14) de l'ensemble (100), dans la région du creux (44) du pignon (10).

9. Entraînement d'arbre à cames selon la revendication 8,
**caractérisé en ce que**
la pièce de l'ensemble (100) qui est munie de l'alésage (48) est la masse en rotation supplémentaire (14).

10. Entraînement d'arbre à cames selon l'une quelconque des revendications précédentes,
**caractérisé en ce que**
le trou traversant (40) est évasé en direction axiale dans la masse en rotation supplémentaire (14) et/ou dans le disque capteur (12).

11. Entraînement d'arbre à cames selon l'une quelconques des revendications précédentes,
**caractérisé en ce que**
le mécanisme d'entraînement sans fin est un entraînement par chaîne et le pignon est un pignon à chaîne.

12. Entraînement d'arbre à cames selon l'une quelconque des revendications 1 à 10,
**caractérisé en ce que**
le mécanisme d'entraînement sans fin est une courroie dentée et le pignon est un pignon à courroie dentée (10).
